# EUROPÄISCHE PATENTSCHRIFT

(11) **EP 2 304 508 B1**
(45) Veröffentlichungstag und Bekanntmachung des Hinweises auf die Patenterteilung: **26.02.2014**
(21) Anmeldenummer: 09772189.8
(22) Anmeldetag: 03.07.2009
(51) Int. Cl.: G05B 9/03, H02P 6/18, H02P 21/14

(54) **VERFAHREN ZUR BESTIMMUNG DER POSITION DES ANTRIEBS EINER ELEKTRISCHEN MASCHINE, WIE MOTOR, AUS DEM ZUGEFÜHRTEN STROM, UND EINRICHTUNG ZUR AUSFÜHRUNG DES VERFAHRENS**
METHOD FOR DETERMINING THE POSITION OF THE DRIVE OF AN ELECTRIC MACHINE SUCH AS A MOTOR FROM THE APPLIED CURRENT AND DEVICE FOR CARRYING OUT THE METHOD
PROCÉDÉ POUR DÉTERMINER LA POSITION DE L'ORGANE D'ENTRAÎNEMENT D'UNE MACHINE ÉLECTRIQUE TELLE QU'UN MOTEUR À PARTIR DU COURANT D'ALIMENTATION, ET DISPOSITIF POUR LA MISE EN OEUVRE DU PROCÉDÉ

(30) Priorität: 03.07.2008 DE 102008031201
(43) Veröffentlichungstag der Anmeldung: 06.04.2011
(73) Patentinhaber: Kollmorgen Europe GmbH, 40880 Ratingen (DE)
(72) Erfinder: ACHTERBERG, Jan, 47249 Duisburg (DE)
(74) Vertreter: Müller, Karl-Ernst
(86) Internationale Anmeldenummer: PCT/EP2009/004845
(87) Internationale Veröffentlichungsnummer: WO 2010/000489

(56) Entgegenhaltungen:
- DE-B4- 10 163 010
- US-A1- 2002 043 953

## Beschreibung

Die Erfindung betrifft ein Verfahren zur Bestimmung der Position des Antriebs einer elektrischen Maschine, wie Motor, aus dem zugeführten Strom, wobei zum sicheren Betrieb die Bestimmung der Position des Antriebs auf zwei voneinander unabhängigen Wegen oder Kanälen erfolgt und danach die beiden Positionswerte kombiniert und kreuzweise auf sichere Arbeitsweise, wie Einhaltung einer sicheren Geschwindigkeit oder sichere Positionierung des Antriebs überprüft werden, umfassend die folgenden Verfahrenschritte:
- Bestimmung der Position des Antriebs in dem einen Kanal durch Messung des dreiphasigen Stroms der Maschine, anschließend
- Umsetzung der Messwerte dieses dreiphasigen Stroms zu einem Strom-Raum-Vektor,
- Berechnung des Winkels des Strom-Raum-Vektors innerhalb einer elektrischen Umdrehung und
- Ermittlung der Position des Antriebs (Rotors).

Ein derartiges Verfahren ist aus der DE 101 63 010 B4 bereits bekannt.

Der Nachteil liegt bei dem bekannten Verfahren darin, dass bei niedrigen Geschwindigkeiten und/oder niedrigen Lasten die Amplitude oder Länge des Strom-Raum-Vektors um 0 herum liegt und aufgrund des Springens der Messwerte in allen möglichen Richtungen aufgrund der übergeordneten Drehzahl- oder Lagesegelung, was die Messung der Position und später die Berechnung z.B. der Geschwindigkeit aufgrund Positionsänderung beeinträchtigt. Auf diese Weise zeigen die Messungen große Positions- und Geschwindigkeitsfehler.

Aus der US2002/00439531 A1 ist ein sensorloses Verfahren bekannt, bei welchem ein Strombefehl in der vermeintlichen Feldrichtung d aufgeschaltet wird, um die Reaktion der Maschine messen zu können. Dabei werden Unterschiede in den magnetischen Achsen d und q des Rotors zur Positionsbestimmung herangezogen, da daraus Unterschiede in der Reaktion der Spannungsvektoren auf eine d Stromvorgabe resultieren; hierbei wird der Rotor teilweise blockiert, um keine Bewegung zu erzeugen. Nachteilig bei dem bekannten Verfahren ist, dass dieses nur bei solchen Motorenbauarten anwendbar ist, bei denen es messbare Unterschiede in den magnetischen Achsen des Motors gibt.

Der Erfindung liegt die Aufgabe zugrunde, bei einem gattungsgemäßen Verfahren mit einer zweikanaligen Positionsüberwachung die Genauigkeit der Messungen zu verbessern.

Gelöst wird die Aufgabe dadurch, dass ein Strombefehl, dessen Feld in Richtung des Rotorflusses bzw. Rotorfeldes wirkt, innerhalb des Stators hinzugefügt wird.

Auf diese Weise wird erreicht, dass kein Springen des Messwertes um den 0-Punkt herum mehr auftritt und bei niedrigen Geschwindigkeiten und niedrigen Lasten die Richtung des Strom-Raum-Vektors genau bestimmt werden kann, da immer ein genügend großer Strom fließt.

Gemäß einer weiteren Ausführungsform des Verfahrens gemäß der Erfindung ist die elektrische Maschine ein Servomotor mit permanentmagnetischer Erzeugung des Rotor-Magnetfeldes, während die Wicklung, durch welche der Strom fließt, sich im Stator befindet.

Gemäß einer noch anderen Ausführungsform des Verfahrens dient der Winkel des Strom-Raum-Vektors zur Ermittlung der Position des Rotors des Servomotors.

Gemäß einer noch anderen Ausführungsform des erfindungsgemäßen Verfahrens dient der Winkel des Strom-Raum-Vektors zur Ermittlung der zeitlichen Positionsänderung und damit der Geschwindigkeit des Rotors des Servomotors oder einer sicheren Überwachung einer Position.

Ein Strombefehl wird dann in Richtung des Flusses/Feldes innerhalb des Rotors hinzugefügt, wenn der das Drehmoment erzeugende Strom im Vergleich zum Nennstrom niedrig ist (kann auch dauerhaft erfolgen).

Gemäß einer Weiterbildung des Verfahrens gemäß der Erfindung ist ein Strombefehl dann in Richtung des Flusses/Feldes innerhalb des Rotors hinzugefügt, wenn die Geschwindigkeit des Rotors (Drehzahl) im Vergleich zur Nenndrehzahl niedrig ist.

Andererseits kann ein Strombefehl dann in Richtung des Flusses/Feldes innerhalb des Rotors hinzugefügt werden, wenn der Strom-Raum-Vektor sich um den Wert Null bewegt (kann aber auch dauerhaft zugeführt werden).

Auch ist es möglich, dass ein Strombefehl nur dann in Richtung des Flusses/Feldes innerhalb des Rotors hinzugefügt wird, wenn aufgrund der Servo-Schleifen-Regelung der Strom-Raum-Vektor hin- und herspringt (kann aber auch dauerhaft zugeführt werden).

Die Erfindung betrifft auch eine Einrichtung zur verbesserten Messung der Position des Antriebs einer elektrischen Maschine, wie Motor, aus dem zugeführten Strom, wobei zum sicheren Betrieb die Messung z.B. der Position eines Antriebs auf zwei voneinander unabhängigen Wegen oder Kanälen erfolgt und danach die beiden Messwerte kombiniert und kreuzweise auf sichere Arbeitsweise, wie Einhaltung einer sicheren Geschwindigkeit des Antriebs, überprüft werden, umfassend
- einen Prozessor zur Bestimmung der Position des Antriebs in dem einen Kanal, mit einem Sensor zur Messung des dreiphasigen Stroms der Maschine, mit einem dem Sensor nachgeschaltetem
- Umsetzer zur Umsetzung der Meßwerte dieses dreiphasigen Stroms zu einem Strom-Raum-Vektor, einem dem Umsetzer nachgeschaltetem
- Rechner zur Berechnung des Winkels des Strom-Raum-Vektors innerhalb einer elektrischen Umdrehung und
- zur Ermittlung der Position des Antriebs (Rotors),
wobei erfindungsgemäß
- ein Strombefehl, dessen Feld in Richtung des Rotorflusses oder Rotorfeldes wirkt, innerhalb des Stators (Richtung der Feldschwächung) hinzugefügt wird, wodurch die Genauigkeit der Messung erhöht wird

Die Erfindung wird nachfolgend anhand von Ausführungsbeispielen näher erläutert.

Es zeigt:
- Fig. 1: ein Blockschaltbild der erfindungsgemäßen Einrichtung,
- Fig. 2A: ein Oszillogramm des Stroms der Leitung IA über den Strom der Leitung IB ohne Filterung,
- Fig. 2B: die Ströme IA über IB mit Filterung,
- Fig. 3A: ein Oszillogramm des Stroms IB über IA mit zusätzlichem Feld erzeugenden Strom ohne Filterung, und
- Fig. 3B: den Strom IA über IB nach Filterung.

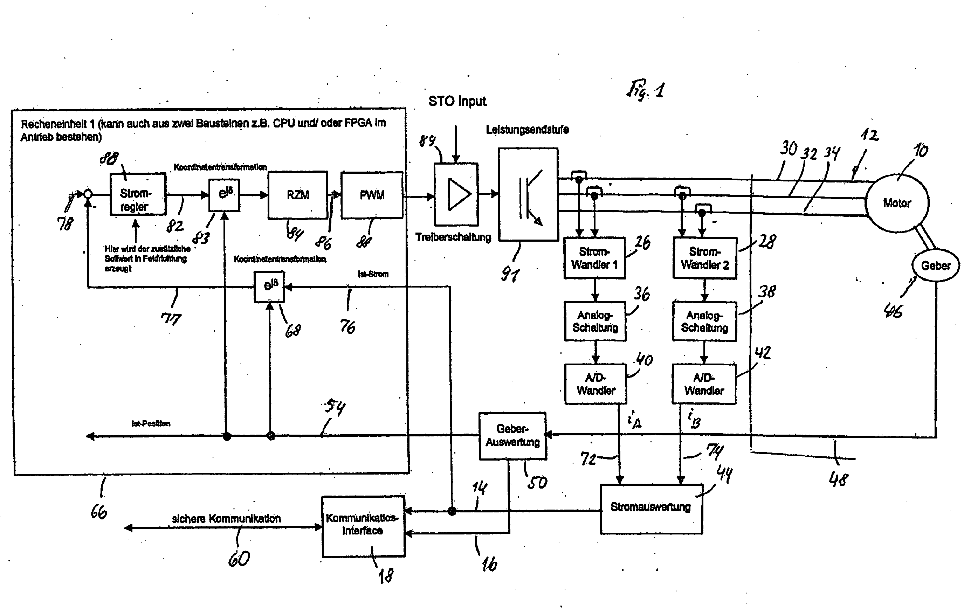

Fig. 1 zeigt ein Blockschaltbild einer Einrichtung zur besseren Messung der Position einer elektrischen Maschine 10 aus dem dem Motor zugeführten Strom 12, wobei zum sicheren Betrieb die Messung der Position des Antriebs auf zwei voneinander unabhängigen Wegen oder Kanälen 14, 16 erfolgt und danach die beiden Messwerte (Geberauswertung, Stromauswertung) kombiniert und auf sichere Arbeitsweise, wie Einhaltung einer sicheren Geschwindigkeit des Antriebs überprüft werden. Wird der Kanal 14 (Stromauswertung) durch eine Recheneinheit verwirklicht, wird der Kanal 16 (Geberauswertung) durch eine zweite Recheneinheit verwirklicht, wobei die beiden Recheneinheiten unabhängig voneinander arbeiten. Dem einen der beiden unabhängig voneinander arbeitenden Recheneinheiten werden die Stromwertberechnungen zugeführt, wobei dieser Stromwert sich aus den Stromwandlern oder Shunts 1 und 2, Blöcke 26, 28 ergibt, welcher Stromwandler 1 bzw. 2 jeweils zwei Phasen der drei Phasen 30, 32, 34 des Motors 10 erfassen.

Dem Stromwandler 1 bzw. 2 ist jeweils eine Analogschaltung 36, 38 nachgeschaltet und diesen ist wiederum ein Analog/Digital-Wandler 40, 42 nachgeschaltet, welche Analog/Digital-Wandier ihrerseits Messwerte IA und IB einem Stromwertberechner 44 zuführen, wobei es sich bei dem Stromwandler um verschiedene Ausführungen handeln kann, z. B. auch um einen einfachen Shunt-Widerstand. Die berechneten Stromwerte werden dann über Leitung 14 dem Kommunikationsinterface im Block 18 zugeführt, zusammen mit einem Gebersignal, das über einen vom Motor 10 angetriebenen Geber 46 erzeugt wird und über Leitung 48 an eine Geberauswertung 50 zugeführt wird. Ein Ausgangssignal der Geberauswertung 50 wird über Leitung 16 den Block 18 zugeführt. Am Ausgang des Kommunikationsinterface bzw. Block 18 stehen dann Signale zur Verfügung, die über eine gesicherte Kommunikation einer Auswerteeinheit zugeführt werden, auf welcher die zweikanalige Positionsauswertung einen Fehlerfall ermitteln sollte. Die Leistungsendstufe kann im Fehlerfall über den STO-Input der Treiberschaltung (siehe Fig. 1, Block 89) inaktiv geschaltet werden.

Ein weiterer Block 68, der zum einen die Geberauswertung 50 (Ist-Position) als Eingang hat und daraus den Strom-Ist-Wert in Rotor-Koordinaten berechnet, erhält weiter als Eingangssignal 76 ein Ausgangssignal der Stromwertberechnung 44 (Ist-Strom), wobei dem Stromwertberechner 44 als Eingänge die Ausgangssignale 72, 74 der Analog/Digital-Wandler 40, 42 zugeführt werden.

Der im Block 44 bzw. 68 (Koordinatentransformation) berechnete Stromwert wird über Leitung 77 als Eingangsgröße zusammen mit einem Sollwert 78 eines Sollwertgebers als Differenz dem Stromregler 80 zugeführt, der sich in der Schaltung 66 befindet. Die Differenz von dem Strom-Ist-Wert 77 und dem einstellbaren Strom-Soll-Wert 78 steuert den Stromregler 80. Aus der Differenz zwischen dem Soll-Wert und dem Ist-Wert, wird durch den Stromregler ein Steuersignal gewonnen und über den Ausgang 82 nach Koordinatentransformation im Block 83 in einen Block 84 (RZM) eingeführt, von welchem Block RZM, 84, der Teil der Schaltung 66 ist, über Leitung 86 ein Ausgangssignal dem Block 88 (PWM) zugeführt wird, der über eine Treiberschaltung 89 und eine Leistungsendstufe 91 die Phasenströme 30, 32, 34 für den Motor 10 steuert.

Es ist der Stromregler 80, in dem der zusätzliche Soll-Wert in Feldrichtung des Motors erzeugt wird. Dabei wird dieser Sollwert dem Stromregler von außen vorgegeben.

Es ist denkbar, die verschiedenen Rechenstufen von einem einzigen (zentralen Prozessoreinheit) CPU durchführen zu lassen, da diese CPU verschiedene Programme gleichzeitig abarbeiten kann. Diese Recheneinheit 66 kann auch aus zwei Bausteinen z. B. CPU und FPGA oder nur einem FPGA bestehen.

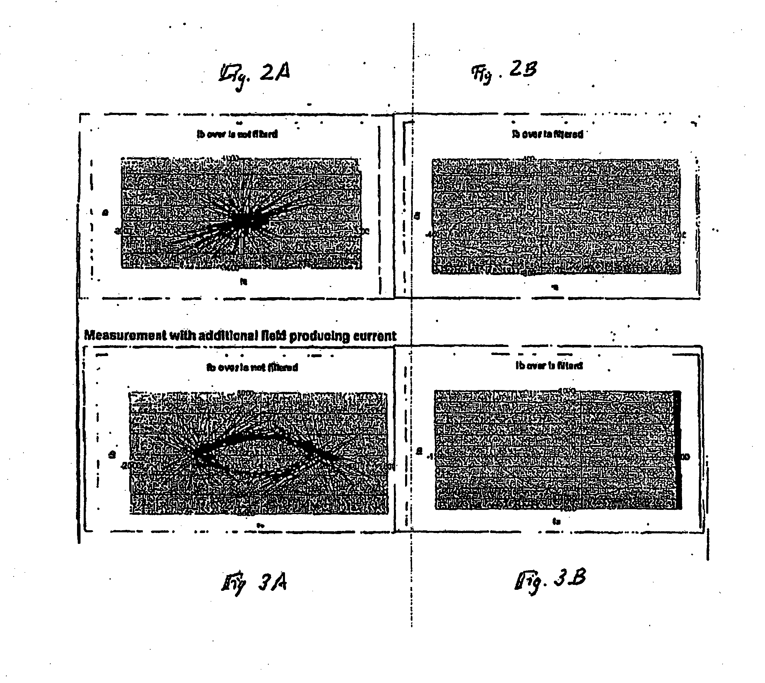

Das Oszillogramm in Fig. 2A zeigt den Strom im stehenden Statorkoordinantensystem, wie er vom Wandler 40, 42 abgegeben wird. Hier ist zu erkennen, dass der Stromraumzeiger um den Nullpunkt herum schwankt und dadurch keine sichere Aussage gemacht werden kann, in welcher Richtung der Stromvektor liegt.

Gemäß Fig. 3A ist die Situation besser, bei der durch einem ein zusätzliches Feld erzeugenden Strom die Messung verbessert wird.

Fig. 2A und 3A stellen die ungefilterten Werte dar, während die Fig. 2B bzw. 3B sich bei Filterung ergeben. ,

Die in Fig. 1 dargestellte Anordnung ermöglicht ein Verfahren zur Bestimmung der Position einer elektrischen Maschine 10, hier ein Motor mit permanentmagnetischer Erzeugung des Rotor-Magnetfeldes (das Stator-Magnetfetd wird von der Schaltung erzeugt), mit welcher Anordnung aus dem zugeführten Strom 30, 32, 34 eine Position ermittelt wird. Die Anordnung ist derart, dass bei Ausfall von einzelnen Komponenten der geschilderten Schaltung gleichwohl sicher gearbeitet werden kann.

Fig. 1 zeigt dazu drei verschiedene Komplexe: Zunächst den Regelkreis, umfassend die Auswertung der Ströme der drei Phasen 30, 32, 34 durch zwei Zweige, jeweils umfassend Stromwandler, Analogschaltung, Analog/Digital-Wandler, welche beiden Kanäle dabei Signale 72, 74 dem Stromwertberechner 44 zuführen und deren Ausgang als Regelungsgröße (Ist-Wert) 76 nach Koordinationstransformation in Block 68 dem Regelkreis zugeführt wird, der den Soll-Wert 78 mit der Differenz zwischen Soll-Wert und Ist-Wert, den Stromregler 80 und die nachfolgenden Blöcke 83, 84, 88, 89, 91 umfasst, die die Ströme für den Antrieb des Motors erzeugen.

Der zweite Komplex umfasst den Geber 46, die Geberauswertung 50, der die Drehzahlberechnung ermöglicht und bei Überschreiten der zulässigen Drehzahl z. B. den Motor 10 anhält.

### Bezugszeichenliste:

- 10: Motor
- 12: dem Motor zugeführter dreiphasiger Strom
- 14: erster Weg oder Kanal
- 16: zweiter Weg oder Kanal
- 18: Block Kommunikations-Interface
- 26: Stromwandler 1
- 28: Stromwandler 2
- 30, 32, 34: die drei Phasen des Motorantriebsstromes
- 36, 38: Analogschaltung
- 40, 42: Analog/Digital-Wandler
- 44: Stromauswertung
- 46: Geber
- 48: Leitung für Gebersignal
- 50: Geberauswertung
- 54: Leitung (Ist-Position)
- 60: Leitung (sichere Kommunikation)
- 66: Schaltung (CPU und/oder FPGA)
- 68: Koordinationstransformation
- 72, 74: Leitungen
- 76: Strom-Ist-Wert
- 78: Strom-Soll-Wert
- 80: Stromregler
- 82: Schnittstelle
- 83: Koordinationstransformatoren
- 84: Block RZM (Raumzeiger-Modulation)
- 86: Schnittstelle
- 88: Block PWM (Pulsweiten-Modulation)
- 89: Treiberschaltung
- 91: Leistungsendstufe

- IA: Stromwert Leitung 72
- IB: Stromwert Leitung 74

## Patentansprüche

1. Verfahren zur Bestimmung der Position des Antriebs einer elektrischen Maschine (10), wie Motor, aus dem zugeführten Strom (30, 32, 34), wobei zum sicheren Betrieb die Bestimmung der Position des Antriebs (10) auf zwei voneinander unabhängigen Wegen oder Kanälen erfolgt und danach die beiden Positionswerte kombiniert und kreuzweise auf sichere Arbeitsweise, wie Einhaltung einer sicheren Geschwindigkeit oder sicheren Positionierung des Motors (10) überprüft werden, umfassend die folgenden Verfahrensschritte:
• Bestimmung der Position des Antriebs (10) aus zwei Stromkanälen durch Messung des dreiphasigen Stroms der Maschine (10), anschließend
• Umsetzung der Messwerte (IA, IB) des dreiphasigen Stroms zu einem Strom-Raum-Vektor,
• Berechnung des Winkels des Strom-Raum-Vektors innerhalb einer elektrischen Umdrehung und
• Ermittlung der Position des Antriebs,
**gekennzeichnet durch**
• Hinzufügen eines Strombefehls mit einem in Richtung des Rotorflusses oder Rotorfeldes wirkenden Feld innerhalb des Stators (10).

2. Verfahren nach Anspruch 1, **dadurch gekennzeichnet, dass** die elektrische Maschine (10) ein Servo-Motor mit permanentmagnetischer Erzeugung des Stator-Magnetfeldes ist.

3. Verfahren nach Anspruch 2, **dadurch gekennzeichnet, dass** der Winkel des Strom-Raum-Vektors zur Ermittlung der Position des Rotors des Servo-Motors dient.

4. Verfahren nach Anspruch 2 oder 3, **dadurch gekennzeichnet, dass** der Winkel des Strom-Raum-Vektors zur Ermittlung der zeitlichen Positionsänderung und damit der Geschwindigkeit des Rotors des Servo-Motors (10) oder insgesamt der Position dient.

5. Einrichtung zur verbesserten Messung der Position des Antriebs einer elektrischen Maschine (10), wie Motor, aus dem zugeführten Strom (30, 32, 34), wobei zum sicheren Betrieb die Messung z.B. der Position eines Antriebs auf zwei voneinander unabhängigen Wegen oder Kanälen erfolgt und danach die beiden Messwerte kombiniert und kreuzweise auf sichere Arbeitsweise, wie Einhaltung einer sicheren Geschwindigkeit des Antriebs oder sichere Positionierung, überprüft werden, umfassend
• einer Schaltung zur Bestimmung der Position des Antriebs in dem einen Kanal, mit einem Sensor (26, 28) zur Messung des dreiphasigen Stroms (30, 32, 34) der Maschine, mit einem dem Sensor (26, 28) nachgeschalteten
• Umsetzer (38, 38, 40, 42, 72, 74, 44) zur Umsetzung der Messwerte dieses dreiphasigen Stroms zu einem Strom-Raum-Vektor, einem dem Umsetzer nachgeschalteten
• Rechner (44) zur Berechnung des Winkels des Strom-Raum-Vektors innerhalb einer elektrischen Umdrehung und
• zur Ermittlung der Position des Antriebs,
**gekennzeichnet durch**
• eine Additionseinrichtung zum Hinzufügen eines Strombefehls, dessen Feld in Richtung des Rotorflusses oder Rotorfeldes wirkt, innerhalb des Stators (10) in Richtung der Feldschwächung.

6. Einrichtung nach Anspruch 5, **dadurch gekennzeichnet, dass** die elektrische Maschine (10) ein Servo-Motor mit permanentmagnetischer Erzeugung des Stator-Magnetfeldes ist.

7. Einrichtung nach Anspruch 6, **dadurch gekennzeichnet, dass** der Winkell des Strom-Raum-Vektors zur Ermittlung der Position des Rotors in der Servo-Maschine dient.

8. Einrichtung nach Anspruch 6 oder 7, **dadurch gekennzeichnet, dass** der Winkel des Strom-Raum-Vektors zur Ermittlung der Positionsänderung und damit der Geschwindigkeit des Rotors des Servo-Motors oder der Position des Rotors dient.

9. Einrichtung nach einem der Ansprüche 5 bis 8, **dadurch gekennzeichnet, dass** die Additionseinrichtung so ansteuerbar ist, dass ein Strom-Befehl, dessen Feld in Richtung des Rotorflusses oder Rotorfeldes wirkt, innerhalb des Stators (10) hinzugefügt wird, wenn der das Drehmoment erzeugende Strom im Vergleich zum Nennstrom niedrig ist.

10. Einrichtung nach einem der Ansprüche 5 bis 8, **dadurch gekennzeichnet, dass** ein Strom-Befehl, dessen Feld in Richtung des Rotorflusses oder Rotorfeldes wirkt, innerhalb des Stators (10) hinzugefügt wird, wenn die Geschwindigkeit des Rotors im Vergleich zur Nenndrehzahl niedrig ist.

11. Einrichtung nach einem der Ansprüche 5 bis 8, **dadurch gekennzeichnet, dass** ein Strom-Befehl, dessen Fehl in Richtung des Rotorflusses oder Rotorfeldes wirkt, innerhalb des Stators (10) hinzugefügt wird, wenn der Strom-Raum-Vektor sich um den Wert Null bewegt.

12. Einrichtung nach einem der Ansprüche 5 bis 9, **dadurch gekennzeichnet, dass** ein Strom-Befehl, dessen Feld in Richtung des Rotorflusses oder Rotorfeldes wirkt, innerhalb des Stators (10) hinzugeführt wird, wenn aufgrund der Servo-Schleifen-Regelung der Strom-Raum-Vektor hin- und herspringt.

## Claims

1. Method for determining the position of the drive mechanism of an electric machine (10), such as a motor, from the current (30, 32, 34) that is supplied, whereby for the reliable operation, the determination of the position of the drive mechanism (10) is effected over two paths or channels that are independent of one another, and thereafter the two position values are combined and are cross checked with respect to a safe manner of operation, such as maintenance of a safe speed or safe positioning of the motor (10), including the following method steps:
• determination of the position of the drive mechanism (10) from two current channels by measurement of the three-phase current of the machine (10), subsequently
• convension of the measured values (IA, IB) of the three-phase current to a current space vector,
• calculation of the angle of the current space vector within one electrical revolution, and
• determination of the position of the drive mechanism **characterized by**
• addition of a current command, the field of which acts in the direction of the rotor flux or rotor filed within the stator (10).

2. Method according to claim 1, **characterized in that** the electric machine (10) is a servomotor having permanent magnetic generation of the magnetic field of the stator.

3. Method according to claim 2, **characterized in that** the angle of the current space vector serves for the determination of the position of the rotor of the servomotor.

4. Method according to claim 2 or 3, **characterized in that** the angle of the current space vector serves for the determination of the change in position over time and hence of the speed of the rotor of the servomotor (10), or collectively of the position.

5. Arrangement for the improved measurement of the position of the drive mechanism of an electric machine (10), such as a motor, from the current (30, 32, 34) supplied, whereby for the reliable operation the measurement, e.g. of the position of a drive mechanism, is effected over two paths or channels that are independent of one another, and thereafter the two measured values are combined and are cross checked with respect to a reliable manner of operation, such as maintenance of a safe speed of the drive mechanism or a safe positioning, including
• a circuit for the determination of the position of the drive mechanism in one of the channels, with a sensor (26, 28) for the measurement of the three-phase current (30, 32, 34) of the machine, and following the sensor (26, 28)
• converter (36, 38, 40, 42, 72, 74, 44) for the conversion of the measured values of this three-phase current to a current space vector, and following the converter
• computer unit (44) for the calculation of the angle of the current space vector within one electrical revolution and
• for the determination of the position of the drive mechanism, **characterized by**
• an addition unit for adding a current command, the field of which acts in the direction of the rotor flux or rotor field, within the stator (10) in the direction of weakening of the field.

6. Arrangement according to claim 5, **characterized in that** the electric machine (10) is a servomotor having permanent magnetic generation of the magnetic field of the stator.

7. Arrangement according to claim 6, **characterized in that** the angle of the current space vector serves for the determination of the position of the rotor in the servomachine.

8. Arrangement according to claim 6 or 7, **characterized in that** the angle of the current space vector serves for the determination of the change in position and hence of the speed of the rotor of the servomotor or of the position of the rotor.

9. Arrangement according to one of the claims 5 to 8, **characterized in that** the addition unit can be controlled such that a current command, the field of which acts in the direction of the rotor flux or rotor field, is added within the stator (10) when the current that produces the torque is low in comparison to the rated current.

10. Arrangement according to one of the claims 5 to 8, **characterized in that** a current command, the field of which acts in the direction of the rotor flux or rotor field, is added within the stator (10) when the speed of the rotor is low in comparison to the rated speed.

11. Arrangement according to one of the claims 5 to 8, **characterized in that** a current command, the field of which acts in the direction of the rotor flux or rotor field, is added within the stator (10) when the current space vector moves about the value zero.

12. Arrangement according to one of the claims 5 to 8, **characterized in that** a current command, the field of which acts in the direction of the rotor flux or rotor field, is added within the stator (10) if due to the regulation of the servo loops the current space vector jumps back and forth.

## Revendications

1. Procédé servant à déterminer la position du mécanisme d'entraînement d'une machine électrique (10), telle qu'un moteur, à partir du courant amené (30, 32, 34), sachant qu'aux fins de la fiabilité de fonctionnement, la détermination de la position du mécanisme d'entraînement (10) est effectuée sur deux chemins ou canaux indépendants l'un de l'autre et que par la suite les deux valeurs relatives à la position sont combinées en vue de vérifier de manière croisée la sécurité du mode de fonctionnement, telle que le respect d'une vitesse sans risque ou d'un positionnement sans risque du moteur (10), comprenant les étapes de procédé qui suivent consistant à :
- déterminer la position du mécanisme d'entraînement (10) à partir de deux canaux de courant en mesurant le courant triphasé de la machine (10), puis ;
- convertir lesdites valeurs de mesure (IA, IB) du courant triphasé en un vecteur spatial du courant ;
- calculer l'angle du vecteur spatial de courant dans une rotation électrique ; et
- déterminer la position du mécanisme d'entraînement,
**caractérisé par** l'étape consistant à
- appliquer une commande de courant à l'intérieur du stator (10) avec un champ agissant en direction du flux du rotor ou du champ du rotor.

2. Procédé selon la revendication 1, **caractérisé en ce que** la machine électrique (10) est un servomoteur présentant une production magnétique permanente du champ magnétique du stator.

3. Procédé selon la revendication 2, **caractérisé en ce que** l'angle du vecteur spatial de courant sert à déterminer la position du rotor dans le servomoteur.

4. Procédé selon la revendication 2 ou 3, **caractérisé en ce que** l'angle du vecteur spatial de courant sert à déterminer la modification de position dans le temps et donc la vitesse du rotor du servomoteur (10) ou globalement la position.

5. Système servant à mesurer de manière améliorée la position du mécanisme d'entraînement d'une machine électrique (10), telle qu'un moteur, à partir du courant amené (30, 32, 34), sachant qu'aux fins de la fiabilité de fonctionnement, la mesure par exemple de la position d'un mécanisme d'entraînement est effectuée sur deux chemins ou canaux indépendants l'un de l'autre, et que par la suite les deux valeurs de mesure sont combinées en vue de vérifier de manière croisée la sécurité du mode de fonctionnement, notamment le respect d'une vitesse sans risque du mécanisme d'entraînement ou le positionnement sans risque, comprenant :
- une commutation servant à déterminer la position du mécanisme d'entraînement dans l'un des canaux à l'aide d'un capteur (26, 28) servant à mesurer le courant triphasé (30, 32, 34) de la machine, dotée
- d'un convertisseur (36, 38, 40, 42, 72, 74, 44) installé en aval du capteur (26, 28) et servant à convertir les valeurs de mesure dudit courant triphasé en un vecteur spatial de courant, doté
- d'un calculateur (44) installé en aval du convertisseur et servant à calculer l'angle du vecteur spatial de courant dans une rotation électrique et
- servant à déterminer la position du mécanisme d'entraînement,
**caractérisé par**
- un système d'addition servant à appliquer une commande de courant, dont le champ agit en direction du flux de rotor ou du champ de rotor, à l'intérieur du stator (10) en direction d'un affaiblissement de champ.

6. Système selon la revendication 5, **caractérisé en ce que** la machine électrique (10) est un servomoteur présentant une production magnétique permanente du champ magnétique du stator.

7. Système selon la revendication 6, **caractérisé en ce que** l'angle du vecteur spatial de courant sert à déterminer la position du rotor dans la servomachine.

8. Système selon la revendication 6 ou 7, **caractérisé en ce que** l'angle du vecteur spatial de courant sert à déterminer la modification de position et donc la vitesse du rotor du servomoteur ou la position du rotor.

9. Système selon l'une quelconque des revendications 5 à 8, **caractérisé en ce que** le système d'addition peut être commandé de telle manière qu'une commande de courant, dont le champ agit en direction du flux de rotor ou du champ de rotor, est appliquée dans le stator (10) lorsque le courant générant le couple de rotation est faible en comparaison avec le courant nominal.

10. Système selon l'une quelconque des revendications 5 à 8, **caractérisé en ce qu'**une commande de courant, dont le champ agit en direction du flux du rotor ou du champ du rotor, est appliquée dans le stator (10) lorsque la vitesse du rotor est basse en comparaison avec la vitesse de rotation nominale.

11. Système selon l'une quelconque des revendications 5 à 8, **caractérisé en ce qu'**une commande de courant, dont le champ agit en direction du flux de rotor ou du champ de rotor, est appliquée dans le stator (10) lorsque le vecteur spatial de courant se déplace d'une valeur égale à zéro.

12. Système selon l'une quelconque des revendications 5 à 9, **caractérisé en ce qu'**une commande de courant, dont le champ agit en direction du flux de rotor ou du champ de rotor, est appliquée dans le stator (10) lorsque le vecteur spatial du courant oscille du fait de la régulation de boucles servo.
